# EUROPÄISCHE PATENTSCHRIFT

(11) **EP 4 552 164 B1**
(45) Veröffentlichungstag und Bekanntmachung des Hinweises auf die Patenterteilung: **07.10.2026**
(21) Anmeldenummer: 23736737.0
(22) Anmeldetag: 03.07.2023
(51) Int. Cl.: H01M 4/04, H01M 4/62, H01M 10/0562, H01M 4/02

(54) **VERFAHREN ZUR HERSTELLUNG EINER ELEKTRODE FÜR EINE LITHIUM-IONEN-FESTSTOFFBATTERIE**
METHOD OF MANUFACTURING AN ELECTRODE FOR A LITHIUM ION SOLID-STATE BATTERY
MÉTHODE DE FABRICATION D'UNE ÉLECTRODE POUR UNE PILE AU LITHIUM TOUT SOLIDE

(30) Priorität: 06.07.2022 DE 102022116851
(43) Veröffentlichungstag der Anmeldung: 14.05.2025
(73) Patentinhaber: VOLKSWAGEN AG, 38440 Wolfsburg (DE)
(72) Erfinder: KOCH, Stephan Leonhard, 38239 Salzgitter (DE); KUNZE, Miriam, 30926 Seelze (DE); MEISTER, Paul, 31246 Ilsede (DE); KRAAS, Sebastian, 38302 Wolfenbüttel (DE)
(74) Vertreter: Gulde & Partner
(86) Internationale Anmeldenummer: PCT/EP2023/068139
(87) Internationale Veröffentlichungsnummer: WO 2024/008603

(56) Entgegenhaltungen:
- WO-A1-02/065563
- WO-A1-2005/069411
- WO-A1-2020/225041
- WO-A2-02/101854
- FR-A1- 2 949 907
- US-A1- 2015 086 875
- US-A1- 2021 143 481

## Beschreibung

Die Erfindung betrifft ein Verfahren zur Herstellung einer Elektrode für eine wiederaufladbare Lithium-lonen-Feststoffbatterie.

Wiederaufladbare Lithiumbatterien sind zur allgegenwärtigen Energiequelle für mobile Elektronikgeräte geworden. Sie kommen in Hybrid- und Elektrofahrzeugen zum Einsatz und sind ein wichtiger Bestandteil der Energiespeicherlösungen für erneuerbare Energien.

Lithium-Ionen-Sekundärbatterien sind besonders attraktive Energiespeicher mit hoher gravimetrischer und volumetrischer Kapazität und der Fähigkeit, hohe Leistungen zu erbringen. Sie sind zu allgegenwärtigen Energiequellen für Elektro- und Hybridelektrofahrzeuge geworden. Dies hat zu einem intensiven Interesse an der Entwicklung von Batterieelektroden mit hoher gravimetrischer und volumetrischer Kapazität geführt, um die Energiedichte der derzeitigen Generation von Lithiumbatterien zu verbessern. Die vorliegende Anmeldung befasst sich mit einem spezifischen Herstellungsverfahren für Elektroden, die einer Elektrode, die in einer Lithium-Ionen-Feststoffbatterie Verwendung finden können.

Lithiumbatterien bestehen generell aus elektrochemischen Zellen, die parallel oder in Reihe geschaltet sind, um die gewünschten Strom- und Spannungseigenschaften zu erzielen. Jede Zelle beinhaltet eine positive Elektrode (Kathode) und eine negative Elektrode (Anode), die durch einen elektrisch isolierenden, aber für Lithiumionen durchlässige Separator voneinander getrennt sind. Die Ionenleitung erfolgt bei Feststoffbatterien über einen Festelektrolyt. Anode und Kathode sind über einen externen Stromkreis miteinander verbunden. Während des Ladevorgangs fließen von der Kathode durch den externen Stromkreis Elektronen zur Anode, während Lithiumionen von der Kathode deinterkalieren und durch den Elektrolyten zur Anode wandern, um die Ladungsneutralität zu erhalten. Die Entladung ist einfach die Umkehrung dieses Prozesses. Die Anode erfährt eine Volumenkontraktion, wenn Lithiumionen freigesetzt werden. Die Ionen wandern durch den Elektrolyten zurück und werden an der Kathode eingelagert, während sich die Elektronen durch den externen Stromkreis zur Kathode bewegen und dabei nützliche Arbeit verrichten.

Elektroden für Lithium-Ionen-Feststoffbatterien weisen somit in der Regel zumindest einen Stromkollektor auf, über den die Verbindung zum externen Stromkreis hergestellt wird. Ferner befindet sich eine aktive Beschichtung auf der Oberfläche des Stromkollektors, die erst eine Kontrolle der komplexen Prozesse bei der Anlagerung von Lithium beziehungsweise Freisetzung von Lithiumionen im Zuge der Be- und Endladung der Batterie ermöglichen. Bei einer Lithium-lonen-Feststoffbatterie beinhaltet die aktive Beschichtung zumindest drei Komponenten, nämlich einen Feststoffelektrolyt, ein Aktivmaterial und ein Leitadditiv.

Die Herstellung der Elektroden für Lithium-Ionen-Feststoffbatterien erfolgt herkömmlich derart, dass aus den Komponenten der aktiven Beschichtung unter Zusatz eines Lösungsmittels eine Paste hergestellt wird. Die Paste wird anschließend auf den Stromkollektor aufgetragen und getrocknet. Nachteilig hieran ist, dass die Trocknung energieintensiv ist und die anfallenden Lösungsmittel aufgefangen sowie entsorgt oder aufbereitet werden müssen. Das Arbeiten mit Lösungsmitteln bedingt zudem eine deutlich aufwendigere Prozessgestaltung, um Sicherheitserfordernissen zu genügen, da viele Lösungsmittel gesundheitsgefährdend und entzündlich sind. Die Wahl des Lösungsmittels ist in der Praxis zudem stark eingeschränkt, da eine Veränderung der Komponenten durch Reaktion mit dem Lösungsmittel oder Änderungen in der Morphologie der Beschichtung durch den Lösungsmittelzusatz vermieden werden muss. In der Praxis wird daher häufig N-Methyl-2-pyrrolidone (NMP) eingesetzt, das sehr umweltschädlich ist.

WO 2020/22504 A1 beschreibt ein Herstellungsverfahren für Elektroden, bei dem auf den Einsatz von N-Methyl-2-pyrrolidin (NMP) als Lösungsmittel für ein Fluorpolymer verzichtet werden soll. Dazu wird ein Komposit bereitgestellt, das u.a. 10 - 60 Gew.% einer Flüssigkeit mit einem Siedepunkt von mehr als 150°C enthält. Das Komposit wird auf mehr als 100°C erhitzt und durch Extrusion aufgetragen.

US 2015/086875 A1 beschreibt die Herstellung einer Elektrode für eine Lithium-Ionen-Feststoffbatterie. Zunächst wird eine spezielle Klebeschicht auf dem Kollektor erzeugt, wobei der Auftrag des Materials durch Extrusion erfolgen kann. Anschließend wird ein Gemisch, das einen Feststoffelektrolyten, ein Aktivmaterial und ein Leitadditiv enthält, aufgetragen. Das Gemisch wird als pastöse Dispersion mit einem Lösungsmittel aufgetragen. Danach wird die Paste getrocknet.

WO 02/101854 A1 befasst sich vornehmlich mit der Herstellung von Elektroden für Lithiumpolymer-Batterien. Zur Herstellung der Elektrode wird zentral ein Elektrodenmaterial und am Rand ein zweites Material auf dem Substrat aufgetragen. Der Auftrag kann auch lösungsmittelfrei durch Extrusion erfolgen.

WO 2005/069411 A1 beschreibt ein weiteres Verfahren zur Herstellung einer positiven Elektrode einer Polymerbatterie durch Extrusion.

WO 02/065563 A1 offenbart ein weiteres Verfahren zur Herstellung einer Elektrode, zum Beispiel für die Kathode einer Lithiumpolymer-Batterie. Das Materialgemisch der Beschichtung wird dabei lösungsmittelfrei mit einem Extruder aufgetragen und enthält ein ionenleitendes Polymer. Die Temperatur- und Scherbedingungen des Einschnecken-Extruders sollen hoch genug sein, um eine brauchbare, gut durchmischte, homogene Mischung zu erhalten, und gleichzeitig mild genug, um einen signifikanten Abbau der Elektrodenbestandteile, wie z. B. des Polymers, zu vermeiden.

Ein weiteres Herstellungsverfahren für eine Eisenphosphat-haltige Elektrode offenbart FR 2 949 907 A1. Ein das aktive Material bildendes Gemisch wird dabei mit einem Doppel- oder Mehrschnecken-Extruder in Gegenwart eines wässrigen Lösungsmittels auf den Stromkollektor aufgetragen.

Aus US 2021/143481 A1 ist ein weiteres Beschichtungsverfahren für Elektroden bekannt, bei dem eine anorganische Schicht durch Pyrolyse auf dem Kollektor erzeugt wird. Das vor der Pyrolyse aufgetragene Gemisch kann ein Lösungsmittel, ein Kohlenstoff-haltiges Bindemittel oder eine Silizium-haltige Komponente enthalten.

Der Erfindung liegt nun die Aufgabe zugrunde, die Herstellung von Elektroden so zu gestalten, dass im industriellen Fertigungsprozess auf den Einsatz von Lösungsmittel verzichtet werden kann.

Diese Aufgabe wird durch das erfindungsgemäße Verfahren zur Herstellung einer Elektrode für eine Lithium-Ionen-Feststoffbatterie nach Anspruch 1 gelöst, wobei die Elektrode einen

Stromkollektor und eine auf dem Stromkollektor aufgetragene aktive Beschichtung aufweist. Das Verfahren umfasst die folgenden Schritte:
a) Herstellen eines Gemisches aus einem Feststoffelektrolyt, einem Aktivmaterial und einem Leitadditiv, wobei das Gemisch auf eine Temperatur von 150 °C oder mehr erhitzt wird, wobei der Feststoffelektrolyt eine thio-LiSICon-Struktur oder Argyrodit-Struktur aufweist oder ein sulfidischer Feststoffelektrolyt ist;
b) Auftragen des erhitzten Gemisches auf dem Stromkollektor; und
c) Abkühlen des Gemisches zur Ausbildung der aktiven Beschichtung.

Das Verfahren ist dadurch gekennzeichnet, dass das Herstellen und Erhitzen des Gemisches im Schritt a) in einem Extruder erfolgt und das Gemisch am Ende des Extruders über eine Düse mit dem Stromkollektor und gegebenenfalls der Elektrolytschicht zusammengeführt wird.

Das erfindungsgemäße Verfahren zur Herstellung der Elektroden verzichtet vollständig auf den Einsatz von Lösungsmittel oder Bindemitteln. Vielmehr werden die Komponenten der aktiven Beschichtung ohne weitere Zusätze miteinander vermengt und auf eine Temperatur oberhalb von 150 °C gebracht, sodass eine für den Beschichtungsprozess hinreichende Viskosität des Gemisches erreicht wird. Hierdurch kann der industrielle Fertigungsprozess von wiederaufladbaren Lithium-Ionen-Batterien sicherer gestaltet werden. Zudem werden Kosten für die Entsorgung von Lösungs- und Bindemittelabfällen vermieden.

Mit anderen Worten, die aufzutragende Masse, die die aktive Beschichtung der Elektrode ergeben soll, wird erwärmt, sodass die Viskosität deutlich absinkt und man eine knetbare Masse erhält. Eine Erniedrigung der Viskosität kann durch den Eintrag hoher Scherkräfte erreicht werden. Nach der Beschichtung und durch Abkühlen der Masse wird diese fest und kann den üblichen Betriebsbedingungen von Lithium-Ionen-Feststoffbatterien mechanisch standhalten.

Im Schritt a) werden die Komponenten, die später die aktive Beschichtung bilden sollen, miteinander vermengt und gleichzeitig oder im Anschluss auf eine für Schritt b) geeignete Temperatur gebraucht. Beim Vermengen der Komponenten können gleichzeitig hohe Scherkräfte durch den verwendeten Mischer eingetragen werden, die die Viskosität des Gemisches zusätzlich erniedrigen. Die Temperatur wird so eingestellt, dass zumindest am Ende des Schrittes a) ein Gemisch mit der für Schritt b) benötigten Temperatur bereitsteht.

Die Temperatur des Gemisches beim Auftragen im Schritt b) liegt vorzugsweise im Bereich von 150 °C bis 300 °C. Bei mindestens 150°C ist eine hinreichend niedrige Viskosität des Gemischs sichergestellt. Die obere Grenze wird durch die Stabilität insbesondere des Aktivmaterials und des Elektrolyten festgelegt.

Im Schritt b) wird das erhitzte Gemische auf den Stromkollektor aufgetragen. Die für dieses Schritt geeigneten Verarbeitungsverfahren sind hinlänglich bekannt. Beispielsweise kann der Auftrag der Masse über eine Düse erfolgen, die über den zu beschichtenden Stromkollektor geführt wird. Vorzugsweise erfolgt das Auftragen in Schritt b) unter Schutzgasatmosphäre, zum Beispiel unter Stickstoff oder Argon, um Nebenreaktionen mit Luftsauerstoff bei den erhöhten Temperaturen zu unterdrücken.

Schritt c) sieht das Abkühlen der Masse auf Umgebungstemperatur (z.B. 25 °C) vor, wobei sich die aktive Beschichtung ausbildet. Das Abkühlen kann aktiv oder passiv erfolgen.

Die Elektrode kann eine Kathode oder Anode sein. Vorzugsweise wird das Verfahren jedoch zur Herstellung der Kathode verwendet. Die Begriffe "Kathode" und "Anode" beziehen sich auf die Elektroden der Batterie. Während eines Ladezyklus in einer Lithium-Sekundärbatterie verlassen die Li-Ionen die Kathode und wandern durch einen Elektrolyten und zur Anode. Gleichzeitig verlassen die Elektronen die Kathode und wandern durch einen externen Stromkreis zur Anode. Während eines Entladezyklus in einer Lithium-Sekundärbatterie, wandern Li-Ionen durch den Elektrolyten zurück zur Kathode und von der Anode weg. Gleichzeitig verlassen Elektronen die Anode und wandern durch den externen Stromkreis zur Kathode.

Als Stromkollektor im Sinne der vorliegenden Erfindung wird ein Gebilde innerhalb der Batterieelektroden verstanden, das so konstruiert ist, dass es einen Stromfluss zwischen Zellpolen und den aktiven Massen der Batterie ermöglicht. Stromkollektoren sind unverzichtbare Komponenten zur Überbrückung von Lithium-Ionen-Batterien und externen Stromkreisen und haben großen Einfluss auf die Kapazität, Leistungsfähigkeit und Langzeitstabilität von Lithium-Ionen-Batterien. Herkömmliche Stromkollektoren, wie Al- und Cu-Folien, werden seit der ersten kommerziellen Lithium-Ionen-Batterie verwendet, Es können auch alternative Materialien und Strukturen sowie spezifische Behandlungen wie Ätzen und Kohlenstoffbeschichtung Einsatz finden, die zum Beispiel die elektrochemische Stabilität und elektrische Leitfähigkeit verbessern. Die Stromkollektoren müssen so ausgewählt sein, dass sie der Beschichtungstemperatur aus Schritt b) standhalten.

Das aufgetragene Gemisch weist insbesondere die folgende Zusammensetzung auf:
1 bis 50 Gew.% Feststoffelektrolyt, vorzugsweise 1 bis 30 Gew.% Feststoffelektrolyt
50 bis 99 Gew.% Aktivmaterial, vorzugsweise 70 bis 99 Gew.% Aktivmaterial
0,1 bis 5 Gew.% Leitadditive, vorzugsweise 0,1 bis 3 Gew.% Leitadditive
0 bis 1 Gew.% weitere Additive und
Verunreinigungen mit weniger als 1 Gew.%,
wobei sich die Anteile auf das Gesamtgewicht des Gemisches beziehen und sich alle Anteile zusammengenommen auf 100 Gew.% addieren.

Der Begriff "Feststoffelektrolyt" bezieht sich auf ein festes, ionenleitendes und elektrisch isolierendes Material. Elektrolyte ermöglichen demnach die elektrische Isolierung der Kathode und der Anode einer Sekundärbatterie während Ionen, wie in der vorliegenden Anwendung Li⁺, durch den Elektrolyten übertragen werden können. Festelektrolyte weisen eine feste Elektrolytschicht auf, die auch als Festelektrolyt-Separator bezeichnet wird. Dementsprechend werden Festelektrolyte als Separator zwischen Anode und Kathode verwendet und dienen der Weiterleitung von Ionen in die Kathode bzw. Anode (wenn hierfür nicht Lithium Metall benutzt wird). Das Festelektrolytmaterial für den Separator muss nicht identisch mit einem Festelektrolytmaterial sein, dass einer aktiven Beschichtung der Elektroden beigemengt werden kann.

Der Feststoffelektrolyt weist eine thio-LiSICon-Struktur oder Argyrodit-Struktur auf oder ist ein sulfidischer Feststoffelektrolyt. Besonders bevorzugt weist der Feststoffelektrolyt eine Argyrodit-Struktur auf oder ist ein sulfidischer Feststoffelektrolyt. Die Festelektrolyte können dabei kristallin/ keramisch, teilkristallin/ glas-keramisch oder amorph/ glasig vorliegen.

LiSICon ist ein Akronym für Lithium Super Ionic Conductor und bezog sich ursprünglich auf eine Familie von Mineralien mit der chemischen Formel Li₂₊₂ₓZn₁₋ₓGeO₄. Die Bezeichnung wird jedoch mittlerweile auch für strukturell vergleichbare Minerale mit abweichender chemischer Zusammensetzung verwendet und wird auch vorliegend so verstanden. Durch den Ersatz von Sauerstoff durch Schwefel erhält man eine thio-LiSICon-Struktur. Geeignete schwefelbasierte Feststoffelektrolyte umfassen beispielsweise Li₂S-P₂S₅-X-Systeme (mit X = SiS₂, GeS₂, Lil, P₂S₃, P₂Se₅, P₂O₅ oder ohne Zusatz).

Argyrodit ist ein Mineral mit einem orthorhombischen Kristallsystem der chemischen Zusammensetzung Ag₈GeS₆. Der Begriff wird vorliegend für Lithiumionenleiter verwendet, die ein vergleichbares Kristallsystem aufweisen. Beispiele umfassen Li₇₋ₓZCh₆₋ₓXₓ mit x = 0 bis 1, Z = P oder As, Ch = S oder Se und X = Cl, Br oder I. Besonders bevorzugt sind die Li-Argyrodite Li₆PS₅X (X= Cl, Br and I), Li₇PS₆ und Li₇PSe₆ und Li_{6.6}P_{0.4}Ge_{0.6}S₅I.

Hohe lonenleitfähigkeiten lassen sich auch mit sulfidischen Feststoffelektrolyten mit einem von den vorgenannten Strukturtypen abweichenden Aufbau erreichen. Ein Beispiel ist der Ionenleiter Li₁₀GeP₂S₁₂ (LGPS) und hiervon abgeleitete Ionenleiter mit LGPS-Struktur, wie Li₁₀SiP₂S₁₂. Ein weiteres Beispiel für einen schwefelbasierten Feststoffelektrolyten ist β-Li₃PS₄. Ferner eignen sich auch insbesondere binäre sulfidische Gläser, wie Li₂S-P₂S₅, Li₂S-SiS₂ und Li₂S-GeS₂ für den Einsatz als Feststoffelektrolyt. Beispiele umfassen 77.5Li₂S-22.5P₂S₅, Lil-Li₂S-P₂S₅, 80Li₂S-20P₂S₅ und 70Li₂S-29P₂S_{S}-1P₂O₅.

Der Begriff "Aktivmaterial" bezieht sich auf ein Material der Sekundärbatterie, das Lithium interkalieren und deinterkalieren kann. Unter Interkalation im chemischen Sinn versteht man die Einlagerung von Ionen oder Atomen in chemische Verbindungen, wobei diese ihre Struktur während des Einlagerungsprozesses nicht wesentlich verändern. Deinterkalation ist der gegenläufige Prozess. Das Aktivmaterial ist für die Verwendung in einer wiederaufladbaren Lithium-Batteriezelle geeignet und während der Lade- und Entladezyklen der Batteriezelle für die Abgabe oder Aufnahme von Lithium-Ionen verantwortlich. Dieselbe Batteriezelle kann ein positives Aktivmaterial und ein negatives Aktivmaterial enthalten.

Schließlich enthält das Gemisch ein Leitadditiv. Das Leitadditiv kann ein Leitruß und/oder eine kohlenstoffbasiertes, leitfähiges Material sein. Bevorzugt sind Leitruße, zum Beispiel CNTs, Graphene oder Nanowires. Leitadditive sind bekannte Zusätze für Lithium-Ionen-Batterien. Leitruß (oder auch als leitfähiger Industrieruß, Leitfähigkeitsruß und Carbon Black bezeichnet) ist eine schwarze Spezialchemikalie, die als Pulver erhältlich ist. Er wird in streng kontrollierten Prozessen hergestellt und enthält mehr als 95 % reinen Kohlenstoff. Leitruß hat weitverzweigte Aggregate, die die elektrische Leitfähigkeit in der Anwendung gewähren. Die Form der Aggregate kann variieren und man unterscheidet zwischen sphärischen, elliptischen, linearen und verzweigten Aggregaten. Besonders bevorzugst sind Leitruße mit linearen und verzweigten Aggregaten, da sie eine höhere elektrische Leitfähigkeit aufweisen und leichter dispergierbar sind. Leitruße werden unter anderem nach dem Furnaceruß-Verfahren und durch thermische Spaltung, wie zum Beispiel dem Acetylen-Ruß-Verfahren, hergestellt. Kohlenstoffbasierte, leitfähige Materialien umfassen Kohlenstoffnanoröhren (CNT) und Graphene.

Nach einer weiteren bevorzugten Verfahrensvariante wird nach oder gleichzeitig mit Schritt b) eine Elektrolytschicht auf der aktiven Beschichtung aufgetragen. Mit anderen Worten, die Elektrolytschicht befindet sich auf der aktiven Beschichtung. Ein Problem bei Lithium-Ionen-Feststoffbatterien ist das Dendritenwachstum von Lithium. Im Laufe mehrerer Lade-/Entladezyklen bilden sich auf der Lithiummetalloberfläche mikroskopisch kleine Lithiumfasern, sogenannte Dendriten, die sich immer weiter ausbreiten. Sollte der Lithium-Dendrit beim Betreiben der Batterie bis auf die Kathodenseite wachsen, wird damit die Batterie kurzgeschlossen. Eine Elektrolytschicht kann das Phänomen verhindern.

Es ist vorgesehen, dass das Herstellen und Erhitzen des Gemisches im Schritt a) in einem Extruder erfolgt und das Gemisch am Ende des Extruders über eine Düse mit dem Stromkollektor und gegebenenfalls der Elektrolytschicht zusammengeführt wird. In einem Extruder kann das Vermengen und Aufheizen des Materials sehr effektiv unter gleichzeitigem Eintrag von hohen Scherkräften erfolgen. Das erhitzte Gemisch kann im Anschluss direkt über eine Düse aufgetragen werden, was den Verfahrensablauf sehr kompakt gestaltet.

Nach einer weiteren Verfahrensvariante durchläuft der Stromkollektor mit dem aufgetragenem Gemisch unmittelbar nach Schritt b) einen Kalander. Ein Kalander ist ein System aus mehreren aufeinander angeordneten, bevorzugt beheizten, und polierten Walzen aus Schalenhartguss oder Stahl, durch deren Spalten der beschichtete Stromkollektor hindurchgeführt wird. Hierdurch wird die aktive Beschichtung weiter verdichtet und somit die elektrochemischen Eigenschaften der Lithium-Ionen-Feststoffbatterie verbessert.

Wenn die Elektrode als positive Elektrode (Kathode) der Batterie verwendet wird, können als Kathodenmaterialien unterschiedliche anorganische Lithiumverbindungen zum Einsatz kommen. Beispiele umfassen:
- NMC (NCM) - Lithium Nickel Cobalt Mangan Oxide (LiNiCoMnO₂),
- LFP - Lithium Eisen Phosphate (LiFePO₄/C),
- LNMO - Lithium Nickel Mangan Spinel (LiNi_{0.5}Mn_{1.5}O₄),
- NCA - Lithium Nickel Cobalt Aluminium Oxide (LiNiCoAlO₂),
- LMO - Lithium Mangan Oxide (LiMn₂O₄), und
- LCO - Lithium Cobalt Oxide (LiCoO₂).

Bevorzugt für das Herstellungsverfahren sind NMC und LFP aufgrund ihres günstigen thermischen Verhaltens.

Wenn die Elektrode als negative Elektrode (Anode) der Batterie verwendet wird, können als Anodenmaterialien beispielsweise verwendet werden:
- Graphit,
- Silizium oder Lithiumlegierungen von Silizium, und
- Lithiumlegierungen von Zinn
- Lithiummetall.

Weitere bevorzugte Ausgestaltungen der Erfindung ergeben sich aus den übrigen, in den Unteransprüchen genannten Merkmalen und der nachfolgenden Beschreibung.

Die verschiedenen in dieser Anmeldung genannten Ausführungsformen der Erfindung sind, sofern im Einzelfall nicht anders ausgeführt, miteinander kombinierbar.

Die Erfindung wird nachfolgend in Ausführungsbeispielen anhand der zugehörigen Zeichnungen erläutert. Es zeigen:
- Figur 1: einen schematischen Aufbau einer wiederaufladbaren Lithium-Ionen-Batterie.
- Figur 2: ein Ablaufdiagramm zum erfindungsgemäßen Herstellungsverfahren einer Kathode nach einem Ausführungsbeispiel.
- Figur 3: ein schematischer Aufbau einer ersten Verfahrensvariante mit einem Extruder und Kalander.
- Figur 4: ein schematischer Aufbau einer zweiten Verfahrensvariante mit einem Extruder und Kalander.
- Figur 5: ein schematischer Aufbau einer dritten Verfahrensvariante mit einem Extruder und Kalander.

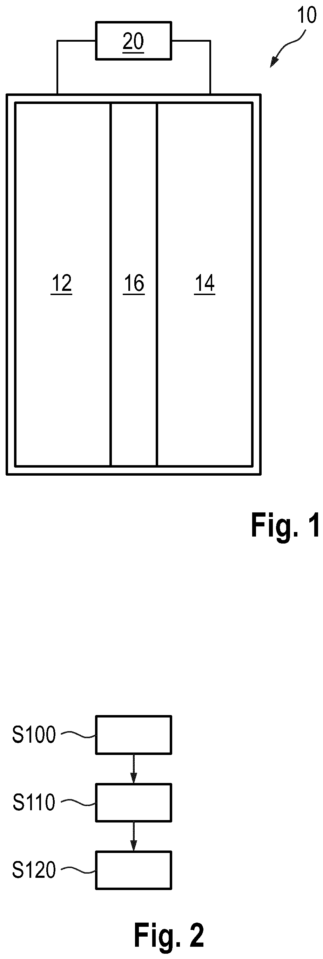

Figur 1 zeigt stark schematisiert in einer Schnittansicht den grundsätzlichen Aufbau einer wiederaufladbaren Lithium-Ionen-Batterie 10. Die Lithium-Ionen-Batterie 10 beinhaltet eine positive Elektrode (Kathode 12) und eine negative Elektrode (Anode 14), die durch einen elektrisch isolierenden, aber für Lithiumionen durchlässige Separator 16 voneinander getrennt sind. Die Ionenleitung erfolgt über einen Elektrolyt. Anode 14 und Kathode 12 sind über einen externen Stromkreis miteinander verbunden. Während des Ladevorgangs fließen von der Kathode 12 durch den externen Stromkreis Elektronen zur Anode 14, während Lithiumionen von der Kathode 12 deinterkalieren und durch den Elektrolyten zur Anode 14 wandern, um die Ladungsneutralität zu erhalten. Die Entladung ist einfach die Umkehrung dieses Prozesses. Die Anode 14 erfährt eine Volumenkontraktion, wenn Lithiumionen freigesetzt werden. Die Ionen wandern durch den Elektrolyten zurück und werden an der Kathode 12 eingelagert, während sich die Elektronen durch den externen Stromkreis zur Kathode 12 bewegen und dabei nützliche Arbeit verrichten (Last 20).

Die Anode 14 ist beispielsweise eine Graphit-Anode und lässt sich über ein analoges Verfahren herstellen, wie es weiter unten für die Kathode 12 anhand der Verfahrensschritte, die in Figur 2 dargestellt sind, näher erläutert wird.

Die Kathode 12 weist beispielsweise einen Stromkollektor aus Aluminium auf, deren Oberfläche von einer Elektrolytschicht bedeckt ist, die wiederum eine aktive Beschichtung trägt. Das Verfahren zur Herstellung der Kathode gemäß dem Ausführungsbeispiel wird nachfolgend anhand der Verfahrensschritte, die in Figur 2 dargestellt sind, näher erläutert.

Im Schritt S100 des Verfahrens wird in ein Gemisch aus einem Feststoffelektrolyt, einem Aktivmaterial und einem Leitadditiv hergestellt. Die Bestandteile können dazu mit gängigen mechanischen Verfahren miteinander vermengt werden. Ziel ist es, eine Mischung mit einer möglichst homogenen Verteilung der Komponenten zu erhalten. Dazu können die Komponenten beispielsweise in einem Extruder aufbereitet werden. Als Aufbereitungsextruder kann beispielsweise ein gleichlaufender dichtkämmender Doppelwellenextruder verwendet werden. Das Material wird dabei gleichzeitig auf eine Temperatur im Bereich von 150 °C bis 300 °C, zum Beispiel 200 °C, erhitzt.

Das Gemisch kann für die Kathode beispielsweise 20 Gew.% eines Feststoffelektrolyten mit einer Argyrodit-Struktur, 78 Gew.% eines NMC-Kathodenmaterials als Aktivmaterial und 2 Gew.% Leitruß als Leitadditiv enthalten.

Im Schritt S110 wird die erzeugte, homogene und erhitzte Mischung auf einen Stromkollektor unter Schutzgasbedingungen aufgetragen. Das Stromkollektor kann beispielweise eine Metallfolie sein (Al oder Cu). Auch für diesen Verfahrensschritt kann Rückgriff auf gängige mechanische Beschichtungstechniken genommen werden. Pasten können beispielsweise durch Walzenbeschichtung, thermisches Spritzen, Schlitzdüsenbeschichtung, Sprühbeschichtung oder Rakelbeschichtung aufgetragen werden. Auf die aktive Beschichtung kann zusätzlich eine Elektrolytschicht aufgebracht werden, zum Beispiel aus demselben Feststoffelektrolyten, der für die Herstellung der aktiven Beschichtung verwendet wird, oder in Form einer Polymerelektrolytfolie. Die Elektrolytschicht kann nach Schritt S120 aufgetragen werden oder auch gleichzeitig mit diesem Schritt, wie weiter unten noch näher erläutert wird.

Im Schritt S120 wird der beschichtete Stromkollektor abgekühlt, wobei sich die gewünschte aktive Beschichtung ausbildet.

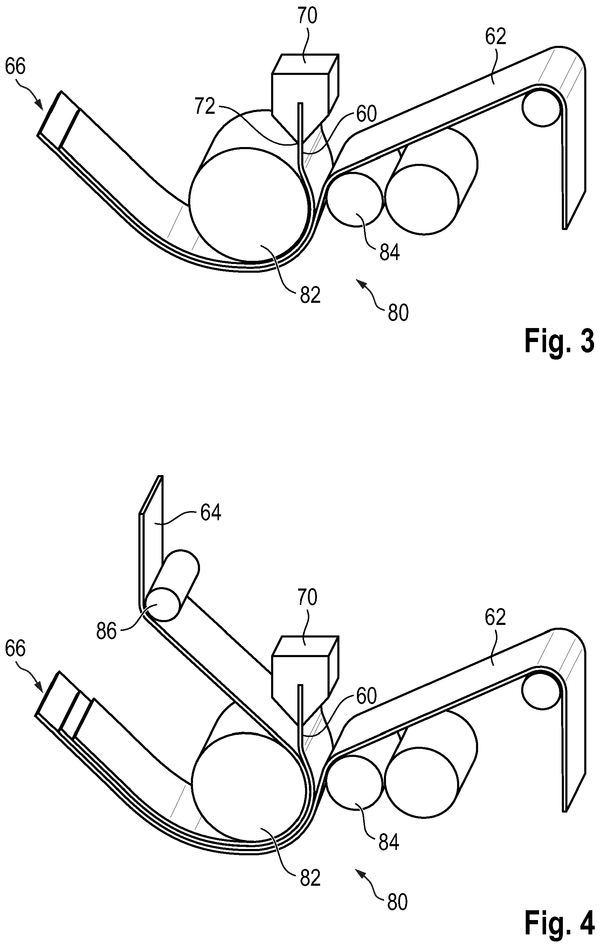

Figur 3 zeigt einen schematischen Aufbau einer ersten Verfahrensvariante, nach der eine Elektrode hergestellt werden kann. Die vermengten und erhitzen Komponenten zur Herstellung der aktiven Beschichtung werden über eine Düse 72 am Ende eines Extruders 70 als ein Film 60 ausgegeben. Der Extruder 70 kann beispielsweise ein beheizbarer Doppelwellenextruder sein. Der Film 60 läuft in einen Kalander 80 und zwar auf eine erste Walze 82. Über eine zweite Walze 84 wird eine Metallfolie 62 mit dem Film 60 zusammengeführt und bildet ein aus beiden Bestandteilen zusammengesetztes Elektrodenband 66, das nach dem Abkühlen und gegebenenfalls Konfektionieren als Elektrode dient.

Figur 4 zeigt einen schematischen Aufbau einer zweiten Verfahrensvariante, nach der eine Elektrode hergestellt werden kann. Der Aufbau entspricht weitgehend dem aus Figur 3, so dass an dieser Stelle nur auf die bestehenden Unterschiede eingegangen wird. Der Kalander 80 weist eine dritte Walze 86 auf, die dazu dient, eine Polymerelektrolytfolie 64 von der der Metallfolie 62 gegenüberliegenden Seite in Richtung der Walzen 82, 84 zu führen. Zwischen den Walzen 82 und 84 werden demnach alle drei Bestandteile der zu fertigenden Elektrode - also der Film 60 aus den Materialien der aktiven Beschichtung, die Metallfolie 62 als Stromkollektor und die Polymerelektrolytfolie 64 als Schutzschicht gegen Dendritenwachstum - in einem einzigen Prozessschritt miteinander in Kontakt gebracht.

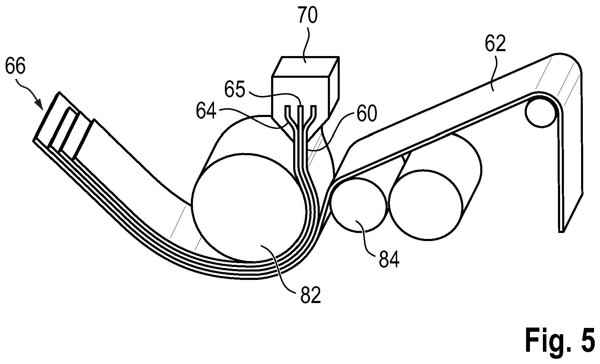

Figur 5 zeigt einen schematischen Aufbau einer dritten Verfahrensvariante, nach der eine Elektrode hergestellt werden kann. Der Aufbau entspricht erneut weitgehend dem aus Figur 3, so das auch an dieser Stelle auf die obigen Ausführungen verwiesen wird und nur auf die Unterschiede eingegangen wird. Der Extruder 70 ist derart ausgelegt, dass nicht nur ein Gemisch der Komponenten für die aktive Beschichtung in Form eines Films 60 bereitgestellt wird, sondern zusätzlich auch zwei Elektrolytschichten auf der aktiven Beschichtung aufgetragen werden können. Zum einen kann eine Polymerelektrolytfolie 64 mittels des Extruders 70 erzeugt werden. Zum anderen lässt sich ein Elektrolytfilm 65, zum Beispiel auf Basis eines Feststoffelektrolyten, erzeugen, der in der fertigen Elektrode eine weitere Elektrolytschicht bildet, die zwischen der Polymerelektrolytschicht und der aktiven Beschichtung liegt.

### Bezugszeichenliste

- 10: Lithium-Ionen-Batterie
- 12: Kathode
- 14: Anode
- 16: Separator
- 20: Last
- 60: Film zur Herstellung der aktiven Beschichtung
- 62: Metallfolie
- 64: Polymerelektrolytfilm
- 65: Elektrolytfilm
- 66: Elektrodenband
- 70: Extruder
- 72: Düse des Extruders
- 80: Kalander
- 82: erste Walze
- 84: zweite Walze
- 86: dritte Walze

- S100 - S120: Verfahrensschritte

## Patentansprüche

1. Verfahren zur Herstellung einer Elektrode für eine Lithium-Ionen-Feststoffbatterie, wobei die Elektrode einen Stromkollektor und eine auf dem Stromkollektor aufgetragene aktive Beschichtung aufweist und das Verfahren die folgenden Schritte umfasst:
a) Herstellen eines Gemisches aus einem Feststoffelektrolyt, einem Aktivmaterial und einem Leitadditiv, wobei das Gemisch auf eine Temperatur von 150 °C oder mehr erhitzt wird, wobei der Feststoffelektrolyt eine thio-LiSICon-Struktur oder Argyrodit-Struktur aufweist oder ein sulfidischer Feststoffelektrolyt ist;
b) Auftragen des erhitzten Gemisches auf dem Stromkollektor; und
c) Abkühlen des Gemisches zur Ausbildung der aktiven Beschichtung,
**dadurch gekennzeichnet, dass** das Herstellen und Erhitzen des Gemisches im Schritt a) in einem Extruder (70) erfolgt und das Gemisch am Ende des Extruders (70) über eine Düse (72) mit dem Stromkollektor und gegebenenfalls der Elektrolytschicht zusammengeführt wird.

2. Verfahren nach Anspruch 1, wobei die Temperatur des Gemisches beim Auftragen im Schritt b) im Bereich von 150 °C bis 300 °C liegt.

3. Verfahren nach Anspruch 1 oder 2, wobei das Auftragen in Schritt b) unter Schutzgasatmosphäre erfolgt.

4. Verfahren nach einem der vorhergehenden Ansprüche, wobei nach oder gleichzeitig mit Schritt b) eine Elektrolytschicht auf die aktive Beschichtung aufgetragen wird.

5. Verfahren nach einem der vorhergehenden Ansprüche, wobei der Stromkollektor mit dem aufgetragenem Gemisch unmittelbar nach Schritt b) einen Kalander (80) durchläuft.

6. Verfahren nach einem der vorhergehenden Ansprüche, wobei das aufgetragene Gemisch die folgende Zusammensetzung aufweist:
1 bis 50 Gew.% Feststoffelektrolyt,
50 bis 99 Gew.% Aktivmaterial,
0,1 bis 5 Gew.% Leitadditive,
0 bis 1 Gew.% weitere Additive und
Verunreinigungen mit weniger als 1 Gew.%,
wobei sich die Anteile auf das Gesamtgewicht des Gemisches beziehen und sich alle Anteile zusammengenommen auf 100 Gew.% addieren.

7. Verfahren nach Anspruch 1, wobei der Feststoffelektrolyt eine Argyrodit-Struktur aufweist oder ein sulfidischer Feststoffelektrolyt ist.

8. Verfahren nach einem der vorhergehenden Ansprüche, wobei die Elektrode eine Kathode (12) ist.

## Claims

1. Method for producing an electrode for a lithium-ion solid-state battery, wherein the electrode has a current collector and an active coating applied to the current collector and the method comprises the following steps:
a) preparing a mixture of a solid electrolyte, an active material and a conductive additive, wherein the mixture is heated to a temperature of 150°C or more, wherein the solid electrolyte has a thio-LiSICon structure or an argyrodite structure or is a sulfide solid electrolyte;
b) applying the heated mixture to the current collector; and
c) cooling the mixture to form the active coating,
**characterized in that** the mixture is prepared and heated in step a) in an extruder (70) and the mixture is brought together with the current collector and, if applicable, the electrolyte layer at the end of the extruder (70) via a nozzle (72).

2. Method according to claim 1, wherein the temperature of the mixture when applied in step b) is in the range of 150°C to 300°C.

3. Method according to claim 1 or 2, wherein the mixture is applied in step b) under a protective gas atmosphere.

4. Method according to any of the preceding claims, wherein an electrolyte layer is applied to the active coating after or during step b).

5. Method according to any of the preceding claims, wherein the current collector with the applied mixture passes through a calender (80) immediately after step b).

6. Method according to any of the preceding claims, wherein the applied mixture has the following composition:
1 to 50 wt.% solid electrolyte,
50 to 99 wt.% active material,
0.1 to 5 wt.% conductive additives,
0 to 1 wt.% other additives and
impurities at less than 1 wt.%,
wherein the proportions refer to the total weight of the mixture and all proportions add up to 100 wt.%.

7. Method according to claim 1, wherein the solid electrolyte has an argyrodite structure or is a sulfide solid electrolyte.

8. Method according to any of the preceding claims, wherein the electrode is a cathode (12).

## Revendications

1. Procédé de fabrication d'une électrode pour une batterie lithium-ion à l'état solide, dans lequel l'électrode présente un collecteur de courant et un revêtement actif appliqué sur le collecteur de courant et le procédé comprend les étapes suivantes :
a) fabrication d'un mélange composé d'un électrolyte à l'état solide, d'un matériau actif et d'un additif conducteur, dans lequel le mélange est chauffé à une température de 150 °C ou plus, dans lequel l'électrolyte à l'état solide présente une structure thio-LiSICon ou une structure argyrodite, ou est un électrolyte à l'état solide sulfuré ;
b) application du mélange chauffé sur le collecteur de courant ; et
c) refroidissement du mélange pour la formation du revêtement actif, **caractérisé en ce que** la fabrication et le chauffage du mélange à l'étape a) sont effectués dans une extrudeuse (70) et, à la sortie de l'extrudeuse (70), le mélange est amené, par l'intermédiaire d'une buse (72), vers le collecteur de courant et, éventuellement, vers la couche d'électrolyte.

2. Procédé selon la revendication 1, dans lequel la température du mélange lors de l'application à l'étape b) est comprise dans la plage allant de 150 °C à 300 °C.

3. Procédé selon la revendication 1 ou 2, dans lequel l'application à l'étape b) est effectuée sous atmosphère de gaz protecteur.

4. Procédé selon l'une des revendications précédentes, dans lequel, après l'étape b) ou simultanément à celle-ci, une couche d'électrolyte est appliquée sur le revêtement actif.

5. Procédé selon l'une des revendications précédentes, dans lequel le collecteur de courant comportant le mélange appliqué passe dans une calandre (80) immédiatement après l'étape b).

6. Procédé selon l'une des revendications précédentes, dans lequel le mélange appliqué présente la composition suivante :
1 à 50 % en poids d'électrolyte à l'état solide,
50 à 99 % en poids de matériau actif,
0,1 à 5 % en poids d'additifs conducteurs,
0 à 1 % en poids d'autres additifs, et
des impuretés inférieures à 1 % en poids,
dans lequel les proportions se rapportent au poids total du mélange et toutes les proportions s'ajoutent pour s'élever à 100 % en poids.

7. Procédé selon la revendication 1, dans lequel l'électrolyte à l'état solide présente une structure de type argyrodite ou est un électrolyte à l'état solide sulfuré.

8. Procédé selon l'une des revendications précédentes, dans lequel l'électrode est une cathode (12).
